# DEMANDE DE BREVET EUROPEEN

(11) **EP 0 533 580 A1**
(43) Date de publication de la demande: **24.03.1993**
(21) Numéro de dépôt: 92402568.7
(22) Date de dépôt: 18.09.1992
(51) Int. Cl.: B60K 41/24, B60K 41/28, B60T 11/10

(54) **Procédé de commande d'un véhicule équipé d'un mécanisme de transmission automatique ou semi-automatique à rapports étagés ou non**

(30) Priorité: 20.09.1991 FR 9111601
(71) Demandeur: REGIE NATIONALE DES USINES RENAULT S.A., F-92109 Boulogne Billancourt Cédex (FR)
(72) Inventeur: Baudoin, Patrice, F-78620 l'Etang-la-Ville (FR)

(57) **Abrégé**

Procédé de commande d'un véhicule dont la propulsion est assurée par un moteur thermique associé à un mécanisme de changement de vitesses automatique ou semi-automatique transmettant le couple moteur aux roues du véhicule sous le contrôle du conducteur disposant à cet effet d'un levier de sélection présentant au moins une position de marche avant, d'une pédale d'accélérateur et d'une pédale de frein, caractérisé en ce que des informations (1, 2, 3, 4) relatives à la position du levier de sélection (LS), à la vitesse de déplacement du véhicule ν, à la vitesse de rotation du moteur ω et à l'enfoncement α de la pédale d'accélérateur sont centralisées de façon à imposer, sous certaines conditions, une consigne (6) de freinage automatique du véhicule (FA) et/ou une consigne (5) de débrayage à l'arrêt (DA) du mécanisme de changement de vitesses.

## Description

La présente invention se rapporte à la commande des véhicules automobiles. Plus précisément elle concerne les véhicules équipés d'un mécanisme de transmission automatique ou semi-automatique, à rapports étagés ou non. Son intégration aux systèmes électroniques ou à microprocesseur, de contrôle d'une boîte de vitesses automatique, est particulièrement avantageuse, mais elle peut être appliquée à tout autre système de contrôle.

La suppression du couple dit "de traînée", communiquant à un véhicule à l'arrêt équipé d'une transmission automatique conventionnelle une tendance à ramper, due à la non interruption du couple entre le moteur et les roues, et aux caractéristiques du convertisseur hydrodynamique de couple, a déjà fait à ce jour l'objet de nombreux développements. Par la publication EP 0.120.779, de la demanderesse, on connaît notamment un moyen extrêmement fiable de réduire le couple de traînée, consistant à asservir la capacité de serrage du vérin de l'organe d'entrée de la transmission, aux conditions instantanées de vitesse du moteur, et du véhicule.

Une telle disposition, dite "de débrayage à l'arrêt" de la transmission, présente l'avantage de réduire la consommation du véhicule sur lequel elle est mise en oeuvre, de même que son niveau vibratoire. Toutefois, elle présente l'inconvénient de rendre le véhicule indéterminé, quant à son déplacement, dans la situation suivante où elle est utilisée c'est-à-dire :
- moteur tournant,
- levier de sélection de vitesse en position de marche avant,
- accélérateur non enfoncé (pied levé).

Dans cette situation, selon le réglage du dispositif, les dispersions de fabrication, l'usure, la charge du véhicule, le profil de la route ou son état de surface, le véhicule restera immobile ou se déplacera, soit vers l'avant, soit vers l'arrière. Il en résulte un risque d'accident certain, pouvant mettre en jeu la sécurité du conducteur, des passagers ou de l'environnement.

On connaît par ailleurs des dispositifs de freinage automatique, capables de générer ou de maintenir une pression de commande dans le circuit hydraulique de freinage du véhicule. Parmi ceux-ci, il faut distinguer des dispositifs passifs et des dispositifs actifs.

Les premiers ont pour seule fonction d'assurer le maintien dans le circuit de freinage d'une pression préalablement établie par le conducteur en actionnant sa pédale de frein, quand certaines conditions sont réunies. Ils font généralement appel à un clapet anti-retour monté sur le circuit d'alimentation des freins, associé à une électrovanne tout ou rien montée parallèlement au clapet. L'adaptation d'un système de freinage automatique de type "passif' sur un circuit hydraulique de freinage de véhicule, est illustrée notamment par la publication FR 1.580.265, relative à un dispositif de freinage destiné à maintenir immobile un véhicule automobile en stationnement temporaire, par exemple sur une route en pente. Le dispositif décrit dans ce document, comporte à cet effet un groupe valvulaire comprenant deux soupapes dont une soupape commandée et une soupape automatique de non retour ; il permet d'empêcher la cessation de l'effet de freinage obtenu à la suite de l'actionnement des freins par le conducteur, lors du relâchement de la pédale de frein.

En revanche, les dispositifs de freinage automatique actifs sont capables de générer par eux-mêmes une pression dans un circuit de freinage, selon des lois plus ou moins élaborées. Ainsi, lorsqu'un tel dispositif est activé, la pression de freinage peut être régulée pour immobiliser le véhicule quelles que soient ses conditions de charge, de pente, etc... par exemple à l'aide d'une boucle de régulation fermée sur la vitesse même du véhicule. La publication EP 0.201.689 décrit à ce sujet un dispositif de freinage à servofrein assisté pouvant fonctionner sur une pente afin de maintenir le freinage d'un véhicule lorsque la pédale de frein est relâchée par le conducteur. Ce dispositif est équipé d'un circuit de commande détectant des paramètres relatifs à l'aplomb du véhicule et à la position de l'embrayage ; en réponse aux signaux repos, le circuit de commande actionne une valve de commande effectuant une fourniture de pression propre à maintenir le freinage du véhicule lors de la libération de la pédale de frein.

L'invention se propose d'intégrer dans un même dispositif de commande, les avantages propres aux systèmes de débrayage à l'arrêt des transmissions automatiques ou semi-automatiques, et ceux des systèmes de freinage automatique actifs ou passifs.

Elle concerne un procédé de commande d'un véhicule dont la propulsion est assurée par un moteur thermique associé à un mécanisme de changement de vitesses automatique ou semi-automatique transmettant le couple moteur aux roues du véhicule, sous le contrôle du conducteur disposant à cet effet d'un levier de sélection présentant au moins une position de marche avant, d'une pédale d'accélérateur et d'une pédale de frein. Ce procédé est caractérisé en ce que des informations relatives à la position du levier de sélection, à la vitesse de déplacement du véhicule, à la vitesse de rotation du moteur et à l'enfoncement de la pédale d'accélérateur, sont centralisées de façon à imposer, sous certaines conditions, une consigne de freinage automatique du véhicule et/ou une consigne de débrayage à l'arrêt du mécanisme de changement de vitesses.

Selon un mode de réalisation de l'invention, la fonction "freinage automatique" du véhicule est déclenchée lorsque la vitesse de rotation du moteur est supérieure ou égale à une vitesse de rotation de référence, lorsque le levier est en position de marche avant, lorsque la vitesse de déplacement du véhicule est inférieure à une vitesse seuil et lorsque l'enfoncement de la pédale d'accélérateur est inférieur ou égal à un premier enfoncement de référence.

Selon un mode de réalisation de l'invention, le débrayage à l'arrêt de la transmission est déclenché lorsque l'enfoncement de la pédale d'accélérateur est inférieur ou égal à un second enfoncement de référence lui-même inférieur au premier enfoncement de référence.

Selon un mode de réalisation de l'invention, le second enfoncement de référence correspond à une position pied "levé" de la pédale d'accélérateur.

Selon un mode de réalisation de l'invention, le débrayage à l'arrêt du mécanisme de changement de vitesses est inhibé lorsque le levier de sélection est dans des positions particulières de marche avant, par exemple celles n'autorisant pas l'utilisation du rapport le plus élevé.

Selon un mode de réalisation de l'invention, le débrayage à l'arrêt et/ou le freinage automatique sont inhibés par un signal indiquant l'ouverture de la portière du conducteur.

Selon un mode de réalisation de l'invention, le débrayage à l'arrêt et/ou le freinage automatique sont inhibés par un signal indiquant le soulagement du siège du conducteur.

Selon un mode de réalisation de l'invention, le conducteur perçoit un signal visuel ou sonore, l'informant que l'ensemble des conditions requises pour le freinage automatique et/ou le débrayage à l'arrêt sont réunies.

Selon un mode de réalisation de l'invention, le conducteur dispose d'un organe d'actionnement manuel lui permettant d'inhiber ou de rétablir volontairement le processus d'imposition du freinage automatique et/ou du débrayage à l'arrêt.

L'invention sera mieux comprise à la lecture de la description suivante d'un mode de réalisation particulier de celle-ci, en liaison avec les dessins annexés sur lesquels :
- la figure 1 illustre schématiquement un dispositif de freinage automatique de type passif,
- la figure 2 met en évidence la centralisation des informations relatives au procédé de l'invention,
- la figure 3 est un schéma fonctionnel simplifié du procédé de l'invention.

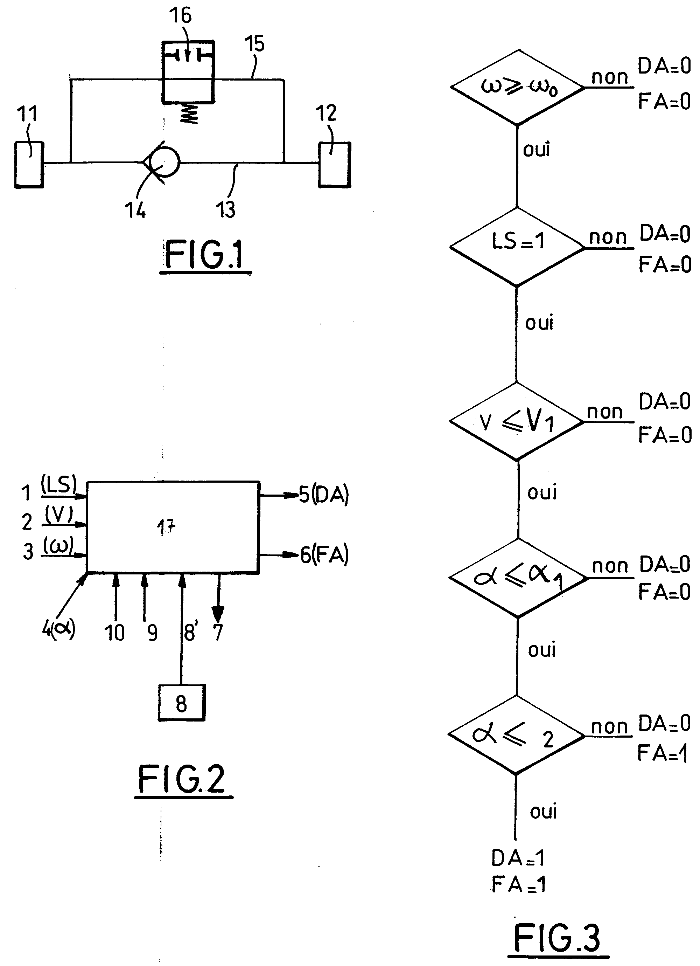

Sur la figure 1 on a représenté schématiquement la liaison hydraulique 13, 15, entre la pédale de frein ou le maître cylindre 11 d'une part, et les freins 12 d'autre part. Cette liaison comporte une première voie 13 munie d'un clapet anti-retour 14 et une dérivation 15 sur laquelle est prévue une électrovanne "tout ou rien" 16. Comme indiqué plus haut, ce dispositif permet, lorsque l'électrovanne 16 est alimentée, d'éviter la chute de pression de freinage normalement consécutive au relâchement de la pédale de frein 11, par l'utilisateur. Lorsque l'électrovanne 16 n'est pas alimentée, le freinage automatique n'est pas activé (FA = o) ; par contre l'alimentation de l'électrovanne 16, liée au fonctionnement du clapet anti-retour 14, assure la mise en oeuvre du freinage automatique (FA = 1), maintenant dans le circuit de freinage la pression établie par le conducteur. Pour des raisons de sécurité, l'électrovanne 16 est passante en l'absence d'excitation électrique, et non passante sous l'effet d'une excitation électrique.

La figure 2 fait apparaître un bloc de commande 17 auquel parviennent des informations déterminant la commande de débrayage à l'arrêt de la transmission (DA) et celle du freinage automatique (FA).

Bien entendu l'existence matérielle d'un bloc de commande 17, spécifique du procédé de l'invention n'est pas indispensable, et on peut admettre que l'élément de centralisation soit intégré à un organe électronique de commande, existant par ailleurs sur le véhicule. Quoi qu'il en soit les informations centralisées sont les suivantes :
- un signal 1 représentatif de la position du levier de sélection de vitesses (LS),
- un signal 2 représentatif de la vitesse de déplacement du véhicule (ν),
- un signal 3 représentatif de la vitesse de rotation du moteur (ω),
- un signal 4 représentatif de l'enfoncement α de la pédale d'accélérateur,
- un signal 9 indiquant l'appui du conducteur sur son siège,
- un signal 10 indiquant l'ouverture de sa portière,
- un signal 8′ lié à la manoeuvre d'un interrupteur 8 ou d'un autre organe actionne par le conducteur pour inhiber ou rétablir l'application du procédé sur le véhicule.

Les signaux émis par cet organe de centralisation sont les suivants :
- un signal 5 d'activation du débrayage à l'arrêt (DA),
- un signal 6 d'activation de la fonction "freinage automatique" (FA),
- un signal 7 d'avertissement du conducteur de l'activation du débrayage à l'arrêt (DA) et/ou du freinage automatique (FA).

Dans l'ensemble de cet exposé on a adopté, pour des raisons de clarté, les notations suivantes, apparaissant notamment sur la figure 3 :
- ν: pour la vitesse de déplacement du véhicule,
- ω: pour la vitesse de rotation du moteur,
- α: pour l'enfoncement de la pédale d'accélérateur,
- LS: pour la position du levier de sélection de vitesses,
- DA: pour le débrayage à l'arrêt,
- FA: pour la fonction "freinage automatique".

La figure 3 fait apparaître que les fonctions de freinage automatique (FA) et le débrayage à l'arrêt (DA) sont inhibées conjointement (DA = o et FA = o), dans les configurations suivantes :
- ω < ω₀, ω₀ étant une vitesse de rotation de référence, légèrement inférieure à la vitesse de rotation du moteur au ralenti, les deux fonctions (FA) et (DA) sont ainsi hors service lorsque le moteur ne tourne pas, ce qui oblige le conducteur à utiliser le frein de parking ou le frein à main lorsqu'il quitte le véhicule ; cette disposition améliore donc la sécurité du véhicule, de ses occupants et de l'environnement.
- LS = o, la position du levier de sélection inhibant les deux fonctions (FA) et (DA) lorsqu'il se trouve en position parking (P), neutre (N) ou de marche arrière (R). Il faut noter qu'en marche arrière, notamment, le véhicule aura un comportement normal (non interruption de la transmission du couple à l'arrêt,' afin de faciliter les manoeuvres).
- ν > ν₁, ν₁ étant un seuil de vitesse qu'on choisit aussi bas que possible en fonction des moyens mis en oeuvre pour mesurer la vitesse du véhicule
- α > α₁, α₁ étant une première valeur de référence de l'enfoncement de la pédale d'accélérateur, correspondant à un enfoncement minime, qui peut être nul, mais pas forcément.

En se reportant à la figure 3, on comprend que l'activation de la fonction freinage automatique (FA = 1) nécessite la conjonction des conditions suivantes :
ω ≧ ω₀, (donc moteur tournant)
- LS = 1, (levier de sélection en position D, 3, 2, ou 1, dans le cas d'une boîte de vitesses automatique à 4 rapports classique)
   ν ≧ ν₁, (donc en particulier lorsque le véhicule est à l'arrêt complet)
   et
   α ≦ α₁,(enfoncement faible de la pédale d'accélérateur).
   α₂ étant une seconde valeur de référence de l'enfoncement de la pédale d'accélérateur, inférieure à la première valeur de référence α₁, la figure 3 met en évidence que pour α₂ < α ≦ α₁
   le débrayage à l'arrêt DA est inhibé tandis que le freinage automatique (FA) ne l'est pas, soit DA = o et FA = 1. Une autre solution pour différencier l'activation des deux fonctions (FA) et (DA), non explicitée sur la figure 3 peut consister à adopter le même seuil d'enfoncement de la pédale d'accélérateur, mais à adopter des temporisations différentes, fixes ou variables en fonction de paramètres tels que la température ou la vitesse d'enfoncement de l'accélérateur, ceci afin d'inhiber le débrayage à l'arrêt avant le freinage automatique lors des redémarrages.

La valeur α₂ pourra avantageusement correspondre à une position "pied levé" de l'accélérateur. Comme le montre la figure 3, lorsque la condition α ≦ α₂ est réunie aux précédentes, le débrayage à l'arrêt est activé, donc DA = 1 ainsi que le freinage automatique, donc FA = 1.

Le procédé qui vient d'être décrit peut si on le désire, être utilement aménagé de la façon suivante : inhibition de la fonction débrayage à l'arrêt (DA = o) hors de la position drive (D) du levier de sélection, en particulier sur la position (3) interdisant l'utilisation du quatrième rapport dans une boîte de vitesses automatique à quatre rapports de marche avant. Cette disposition permet au conducteur d'effectuer des manoeuvres en déplaçant le levier entre les positions reverse (R) et (3), comme dans un véhicule équipé d'une boîte de vitesses automatique classique. L'action du conducteur est alors facilitée si le déplacement du levier des positions (D) à (3) peut être effectuée sans déverrouillage, comme c'est le cas sur des véhicules commercialisés par la demanderesse.

Par ailleurs, on peut prévoir que les deux fonctions sont inhibées (DA = o et FA = o), lorsque le conducteur ouvre sa porte, ou s'il quitte son siège. Ces dispositions sont simples à mettre en oeuvre, puisqu'il suffit de placer judicieusement des capteurs connus (tels que les capteurs couramment utilisés pour commander le plafonnier du véhicule ou les témoins de non-utilisation des ceintures de sécurité), et de centraliser les signaux (9, 10) émis par ces capteurs avec les autres informations nécessaires à la mise en oeuvre du procédé de l'invention. La sécurité s'en trouve accrue car le conducteur ne peut quitter son véhicule si celui-ci est préalablement immobilisé uniquement en raison de l'application du procédé de l'invention.

Il est également judicieux de prévoir que le dispositif objet de l'invention délivre un signal 7, visuel ou sonore, perceptible du conducteur pour lui faire prendre conscience de l'intervention du procédé de commande de l'invention.

Enfin, la présence d'un organe d'actionnement manuel 8 (bouton pressoir ou autre émettant un signal 8′) disponible au conducteur pour inhiber ou réactiver volontairement la mise en oeuvre de la commande, offre une souplesse d'utilisation du véhicule, accrue.

Les avantages présentés par l'application de l'invention sont nombreux et variés. Parmi ceux-ci on peut citer :
- une réduction de la consommation de carburant,
- une réduction du niveau vibratoire du véhicule,
- un agrément de conduite accrue,
- une augmentation de la sécurité.

En effet, la conduite du véhicule, en ville essentiellement, est grandement facilitée par l'invention, puisque le conducteur n'a pas à appuyer en permanence sur la pédale de frein pour maintenir son véhicule immobile.

Enfin du point de vue de la sécurité, l'invention offre un grand intérêt, puisque le véhicule reste immobile tant que le conducteur ne manifeste pas positivement son désir de redémarrer en appuyant sur la pédale d'accélérateur. En particulier, le véhicule n'avancera pas, s'il relâche par inadvertance l'effort de son pied sur la pédale de frein.

## Revendications

**[1]** Procédé de commande d'un véhicule dont la propulsion est assurée par un moteur thermique associe à un mecanisme de changement de vitesses automatique ou semi-automatique transmettant le couple moteur aux roues du véhicule sous le contrôle du conducteur disposant à cet effet d'un levier de sélection présentant au moins une position de marche avant, d'une pédale d'accélérateur et d'une pédale de frein, caractérisé en ce que des informations (1, 2, 3, 4) relatives à la position du levier de sélection (LS), à la vitesse de déplacement du véhicule ν, à la vitesse de rotation du moteur ω, et à l'enfoncement α de la pédale d'accélérateur sont centralisées de façon à imposer, sous certaines conditions, une consigne (6) de freinage automatique du véhicule (FA) et/ou une consigne (5) de débrayage à l'arrêt (DA) du mécanisme de changement de vitesses.

**[2]** Procédé de commande selon la revendication 1, caractérisé en ce que la fonction "freinage automatique" (FA) est déclenchée lorsque la vitesse de rotation du moteur ω est supérieure ou égale à une vitesse de rotation de référence ωₒ, lorsque le levier LS est en position de marche avant, lorsque la vitesse de déplacement du véhicule ν est inférieure ou égal à une vitesse seuil ν₁ et lorsque l'enfoncement de la pédale d'accélérateur α est inférieur ou égal à un premier enfoncement de référence α₁.

**[3]** Procédé de commande selon la revendication 2, caractérisé en ce que le débrayage à l'arrêt (DA) est déclenché lorsque l'enfoncement α de la pédale d'accélérateur est inférieur à un second enfoncement de référence α₂ lui-même inférieur au premier enfoncement de référence α₁.

**[4]** Procédé de commande selon la revendication 3, caractérisé en ce que le second enfoncement de référence α₂ correspond à une position "pied levé" de la pédale d'accélérateur.

**[5]** Procédé de commande selon l'une quelconque des revendications précédentes, caractérisé en ce que le débrayage à l'arrêt (DA) du mécanisme de changement de vitesses est inhibe lorsque le levier de sélection (LS) est dans des positions particulières de marche avant, par exemple celles n'autorisant pas l'utilisation du rapport le plus élevé.

**[6]** Procédé de commande selon l'une quelconque des revendications précédentes, caractérisé en ce que le débrayage à l'arrêt (DA) et le freinage automatique (FA) sont inhibés par un signal (10) d'ouverture de portière.

**[7]** Procédé de commande selon l'une quelconque des revendications précédentes, caractérisé en ce que le débrayage à l'arrêt (DA) et le freinage automatique (FA) sont inhibés par un signal (9) de soulagement du siège du conducteur.

**[8]** Procédé de commande selon l'une quelconque des revendications précédentes, caractérisé en ce que le conducteur perçoit un signal (7) visuel ou sonore l'informant que l'ensemble des conditions requises pour le freinage automatique (FA) et/ou le débrayage à l'arrêt (DA) sont réunies.

**[9]** Procédé de commande selon l'une quelconque des revendications précédentes, caractérisé en ce que le conducteur dispose d'un organe d'actionnement manuel (8) lui permettant d'inhiber ou de rétablir volontairement les fonctions "freinage automatique" (FA) et/ou "débrayage à l'arrêt" (DA).
